# EUROPEAN PATENT SPECIFICATION

(11) **EP 1 426 102 B1**
(45) Date of publication and mention of the grant of the patent: **06.06.2007**
(21) Application number: 03026810.6
(22) Date of filing: 20.11.2003
(51) Int. Cl.: B01J 19/08, B01D 53/92, F01N 3/08

(54) **Process for decreasing content of particulate material contained in exhaust gas from lean burn engine or the like**
Verfahren zur Verminderung des Partikelgehaltes der Abgase eines Magerverbrennungsmotors oder dergleichen
Procédé pour diminuer le taux de particules dans des gaz d'échappement d'un moteur à combustion pauvre ou analogue

(30) Priority: 21.11.2002 JP 2002337832; 21.11.2002 JP 2002337833; 21.11.2002 JP 2002337834
(43) Date of publication of application: 09.06.2004
(73) Proprietor: HONDA MOTOR CO., Ltd., Tokyo (JP)
(72) Inventor: Dosaka, Kenji, Wako-shi Saitama (JP); Hayashi, Tadayoshi, Wako-shi Saitama (JP); Miki, Masanobu, Wako-shi Saitama (JP); Terada, Kazuhide, Wako-shi Saitama (JP); Nakanishi, Yoshiyuki, Wako-shi Saitama (JP)
(74) Representative: Prechtel, Jörg

(56) References cited:
- EP-A- 0 885 647
- WO-A-01/30485
- US-A1- 2002 139 564
- US-B1- 6 321 531

## Description

### BACKGROUND OF THE INVENTION

### FIELD OF THE INVENTION

The present invention relates to a process for decreasing the content of a particulate material contained in an exhaust gas from a lean burn engine or the like.

It is known that this type of the particulate material has a double-layer structure comprising a carbon solid fraction (soot) and a soluble organic fraction (SOF) covering the carbon solid fraction.

### DESCRIPTION OF THE RELATED ART

There is a conventionally known process for decreasing the content of a particulate material contained in an exhaust gas, for example, from a diesel engine or the like, in which a ceramic filter (diesel particulate filter) is placed into an exhaust pipe to collect the particulate material in the filter, and when an amount of the particulate material collected reaches a predetermined value, the temperature of the exhaust gas is raised by an engine control, thereby burning the particulate material.

However, the conventionally known process has the following problems: an exhausting resistance is increased by the ceramic filter, and hence an engine output cannot be sufficiently utilized; the engine control for raising the temperature of the exhaust gas is complicated; and the filter temperature may exceed 1,000°C in some cases during burning of the particulate material, resulting in damage to the ceramic filter.

WO 01/30485A discloses a reactor for plasma treatment of gases and a method of manufacturing a reactor utilizing a non-thermal plasma. The method comprises assembling a bed of active material in an enclosure having gas flow conduits for directing gas to flow through or over the bed of active material, providing electrodes adapted when electrically energized to generate non-theraml plasma in the gas. At least a component of the active material is selected for its capability to adsorb or trap a predetermined chemical species in the gas flow thereby increasing the effective residence time of said species relative to the residence time of species in the gas flow which are not adsorbed or trapped and so modifying the gas phase.

### SUMMARY OF THE INVENTION

Accordingly, it is an object of the present invention to provide a process for decreasing the content of a particulate material, which is capable of continuously converting the particulate material by the oxidization thereof to remarkably decrease the content thereof, and of suppressing an increase in exhausting resistance to a low level.

To achieve the above object, according to the present invention, there is provided a process for decreasing the content of a particulate material contained in an exhaust gas from a lean burn engine, comprising the steps of: generating plasma in the exhaust gas discharged from the lean burn engine and containing the particulate material, to thereby produce a plurality of O (¹D) radicals and subsequently produce a plurality of per-hydroxide excited species; and oxidizing the particulate material by the per-hydroxide excited species, wherein in plasma generating conditions, an intensity E of an electric field is set at a value equal to or larger than 3.0 kV/mm, and a power density Dw is set at a value equal to or larger than 1 W/cm³.

When the plasma is generated in the exhaust gas, the following process is provided: O(¹D) radicals and ozone excited species are produced by the collision between electrons released from electrodes and oxygen molecules → hydroxide excited species are produced by the reaction of O(¹D) radicals and ozone excited species with water → per-hydroxide excited species HOO* having a strong oxidizing force are produced by the reaction of the hydroxide excited species with oxygen. The production of the per-hydroxide excited species is carried out independent of the temperature of the exhaust gas. The particulate material is oxidized and converted by the per-hydroxide excited species. The conversion of the particulate material by the oxidization is conducted continuously and at a relatively low temperature.

A plasma generating device has a good gas permeability, as compared with a filter, so that even if the plasma generating device is incorporated in an exhaust pipe, an increase in exhausting resistance is suppressed to a low level. Therefore, an influence cannot be exerted to an engine output.

The intensity E of electric field is set at a value equal to or larger than 3.0 Kv/mm and a power density Dw is set at a value equal to or larger than 1 W/cm³ in the plasma generating conditions, increasing the amount of released high-energy electrons existing in the plasma, and hence efficiently conducting the production of the per-hydroxide excited species, whereby the conversion of the particulate material by the oxidization can be enhanced. However, if at least one of requirements of E ≥ 3.0 kV/mm and Dw 1 ≥ W/cm³ is lacked, the above-described effect cannot be obtained.

Further, if the surface of at least one of opposed electrodes which is opposed to the other electrodes is covered with a dielectric, the entire surface of the dielectric is uniformly charged upon application of a voltage. Therefore, the entire space between the dielectric and the other electrode opposed to the dielectric constitutes a plasma space, so that the frequency of random contact between the particulate material and the per-hydroxide excited species can be increased to enhance the conversion of the particulate material by the oxidization. If opposed surfaces of the opposed electrodes are covered with dielectrics, respectively, an increase in the applied voltage is provided by an increase in impedance, but it is possible to provide a converting performance equivalent to that in the case where the one surface is covered, by setting the plasma generating conditions as described above.

According to the present invention, there is also provided a process for decreasing the content of a particulate material contained in an exhaust gas from a lean burn engine or the like and comprising a carbon solid fraction and a soluble organic fraction covering the carbon solid fraction, the process comprising the steps of: subjecting the soluble organic fraction to the reaction with oxygen under the presence of a catalyst to oxidize the soluble organic fraction; generating plasma in the exhaust gas to produce plasma excited species; and oxidizing the carbon solid fraction by the plasma excited species.

The soluble organic fraction usually comprises a polycyclic aromatic hydrocarbon and the like. A large amount of oxygen is contained in the exhaust gas from the lean burn engine. Therefore, if the catalyst is present, oxygen and the soluble organic fraction are brought into contact with each other on the catalyst, whereby the soluble organic fraction is oxidized and removed. This reaction occurs even at a low temperature.

When the plasma is generated in the exhaust gas, the plasma excited species are produced by the collision between electrons released from electrodes and gas molecules. The plasma excited species include large numbers of O (¹D) radicals, hydroxide excited species OH*, per-hydroxide excited species HOO* and the like each having a strong oxidizing force, and hence the carbon solid fraction is oxidized by the plasma excited species. The carbon solid fraction is liable to be electrically charged in the plasma, so that there is generated a phenomenon that the carbon solid fraction is oxidized efficiently in a state in which they have been collected electrostatically on the electrodes. The significance of the preliminary removal of the soluble organic fraction from the surface of the particulate material resides in this point. The conversion of the carbon solid fraction by the oxidization as described above is conducted continuously and moreover at a relatively low temperature.

A plasma generating device has a good gas permeability, as compared with a filter, so that even if the plasma generating device is incorporated in an exhaust pipe, an increase in exhausting resistance is suppressed to a low level. Therefore, an influence cannot be exerted to an engine output.

At least one selected from the group consisting of Pt, Pd, Rh, Cu, Ag and Au is used as the catalyst.

The intensity E of electric field is set at a value equal to or larger than 3.0 Kv/mm and a power density Dw is set at a value equal to or larger than 1 W/cm³ in the plasma generating conditions, increasing the amount of released high-energy electrons existing in the plasma, and hence efficiently conducting the production of the plasma excited species, whereby the conversion of the carbon solid fraction by the oxidization can be enhanced. However, if at least one of requirements of E ≥ 3.0 kV/mm and Dw 1 ≥ W/cm³ is lacked, the above-described effect cannot be obtained.

Further, if the surface of at least one of opposed electrodes which is opposed to the other electrodes is covered with a dielectric, the entire surface of the dielectric is uniformly charged upon application of a voltage. Therefore, the entire space between the dielectric and the other electrode opposed to the dielectric constitutes a plasma space, so that the frequency of random contact between the carbon solid fraction and the plasma excited species can be increased to enhance the conversion of the carbon solid fraction by the oxidization. If opposed surfaces of the opposed electrodes are covered with dielectrics, respectively, an increase in the applied voltage is brought about with an increase in impedance, but it is possible to provide a converting performance equivalent to that in the case where the one surface is covered, by setting the plasma generating conditions as described above.

A plasma generating device has a good gas permeability, as compared with a filter, so that even if the plasma generating device is incorporated in an exhaust pipe, an increase in exhausting resistance is suppressed to a low level. Therefore, an influence cannot be exerted to an engine output.

### BRIEF DESCRIPTION OF THE DRAWINGS

Fig.1 is an illustration of a first embodiment of an equipment for a particulate material content decreasing test.
Fig.2 is a diagram of a plasma generating device.
Fig.3 is a graph showing amounts of a particulate material before and after a plasma treatment.
Fig.4 is an illustration of a second embodiment of an equipment for a particulate material content decreasing test.
Fig.5 is a graph showing amounts of a particulate material before and after a catalytic reaction and after a plasma treatment for Example 4.
Fig.6 is a graph showing amounts of a particulate material before and after a catalytic reaction and after a plasma treatment for Example 5.
Fig.7 is an illustration of an illustrative embodiment of an equipment for a particulate material content decreasing test.
Fig.8 is a graph showing amounts of a particulate material before and after a plasma treatment and after a catalytic reaction for Illustrative Example 1.
Fig.9 is a graph showing amounts of a particulate material before and after a plasma treatment and after a catalytic reaction for Illustrative Example 2.

### DESCRIPTION OF THE PREFERRED EMBODIMENTS

### (Embodiment I)

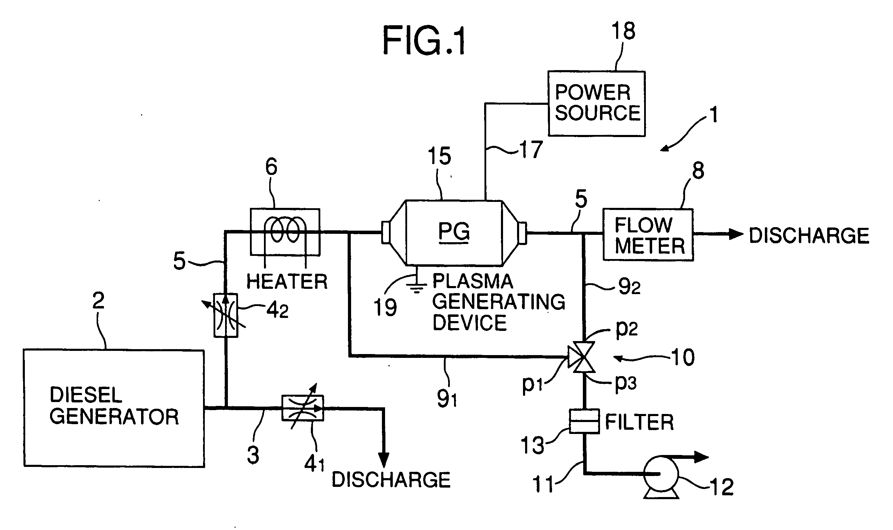

In an equipment 1 for a particulate material content-decreasing test shown in Fig.1, a commercially available diesel generator 2 is selected as a source of generating an exhaust gas containing a particulate material. A first flow rate regulating valve 4₁ is mounted in an exhaust pipe 3 of the diesel generator 2. In the exhaust pipe 3, a conduit 5 is connected at one end between the diesel generator 2 and the first flow rate regulating valve 4₁. A second flow rate regulating valve 4₂, a heater 6, a plasma generating device PG and a flow-meter 8 are mounted in the exhaust pipe 3 sequentially in the named order from the side of the exhaust pipe 3. The other end of the conduit 5 opens to the atmosphere.

In the conduit 5, a first branch pipe 9₁ is connected at one end between the heater 6 and the plasma generating device PG, and at the other end to a first port p₁ of a three-way valve 10. In the conduit 5, a second branch pipe 9₂ is also connected at one end between the plasma generating device PG and the flow-meter 8, and at the other end to a second port p₂ of the three-way valve 10. Another conduit 11 is connected at one end to a third port p₃ of the three-way valve 10, and at the other end to a suction port of a suction pump 12. A filter 13 is mounted in the conduit 11.

The diesel generator 2 is EXT12D made by Honda Motor Co., Ltd., and the specification thereof is as follows: the type of an engine: a water-cooled 3-cylinder and 4-cycle diesel engine; a total displacement: 1061 cc; a fuel used: diesel light oil; a rated output: 12 kVA. The filter 13 is a Teflon-coated filter made by German Laboratory, and has a mesh size of 0.3 µm mesh.

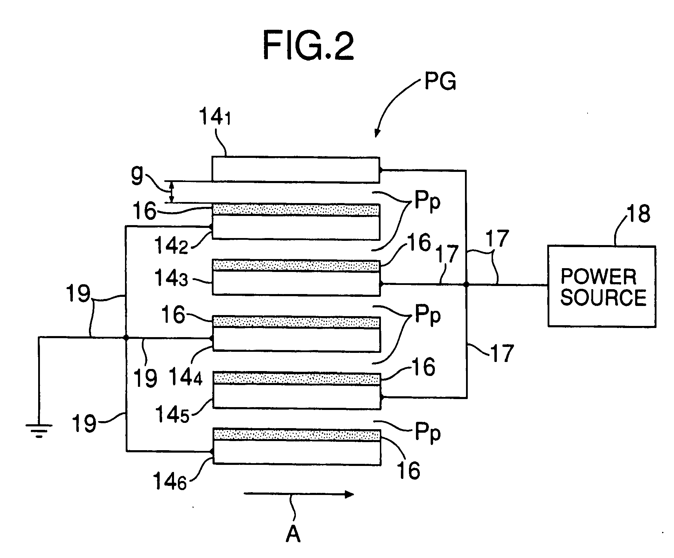

Referring to Fig. 2, the plasma generating device PG includes a plurality of first to sixth electrodes 14₁ to 14₆ made of a metal, each of which is formed into a plate shape in the illustrated embodiment. The first to sixth electrodes 14₁ to 14₆ are mounted in a housing 15 (see Fig. 1) so that they are parallel to a direction A of flowing of an exhaust gas, and the adjacent electrodes 14₁ and 14₂; 14₂ and 14₃; 14₃ and 14₄; 14₄ and 14₅; 14₅ and 14₆ are opposed to each other. The surface of the first electrode 14₁ located at one end, which is opposed to the second electrode 14₂, is a non-coated metal surface, but the surface of the second electrode 14₂, which is opposed to the first electrode 14₁, is coated entirely with a dielectric 16. The arrangement relationship between the opposed surfaces of the first and second electrodes 14₁ and 14₂ applies to those between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. The first, third and fifth electrodes 14₁, 14₃ and 14₅ are connected to a power source 18 through lead wires 17, while the second, fourth and sixth electrodes 14₂, 14₄ and 14₆ are earthed through lead wires 19.

If the plasma generating device PG is constructed as described above, the entire surface of each of the dielectrics 16 is uniformly charged upon application of a voltage, and hence the entire space between each of the dielectrics 16 and each of the electrodes 14₁ to 14₆ which is opposed thereto constitutes a plasma space Pp. Namely, the plasma spaces Pp are formed between the first and second electrodes 14₁ and 14₂; between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. That is, each of the plasma spaces Pp is defined by the opposed electrodes.

Each of the first to sixth electrodes 14₁ to 14₆ is formed of a stainless steel (e.g., JIS SUS316), and has a size of 20 mm long, 50 mm wide and 1.0 mm thick, with a transverse side extending along the exhaust gas flowing direction A. Each of the dielectrics 16 comprises an alumina (Al₂O₃) layer having a thickness of 0.5 mm, which is bonded to each of the second to sixth electrodes 14₂ to 14₆ by the mechanical pressing. The adhesion using an adhesive, the flame spraying or the like may be also utilized for such bonding. A gap g in each of the plasma spaces Pp, namely, a distance between each of the adjacent electrodes 14₁ to 14₆ and each of the dielectrics 16 is 0.5 mm.

A particulate material content reducing test was carried out using the above-described equipment 1, according to the following procedure:
(1) The diesel generator 2 was operated, and an exhaust gas discharged from the diesel generator 2 was caused to flow through the exhaust gas 3 and the conduit 5.
(2) The flow rate of the testing exhaust gas flowing through the conduit 5, and hence through the plasma generating device PG, was regulated to 7.0 L/min by the first and second flow rate regulating valves 4₁ and 4₂, while being measured by the flow-meter 8.
(3) The heater 6 was operated to heat the exhaust gas having a temperature of about 70°C up to 150°C, and the exhaust gas was allowed to flow through the first and third ports p₁ and p₃ of the three-way valve 10. Then, the testing exhaust gas flowing through the conduit 5 was diverted into the first branch pipe 9₁ by driving the suction pump 12 at a suction rate of 5.0 L/min, and caused to flow through the filter 13 over 10 minutes, whereby a particulate material in the testing exhaust gas was collected by the filter 13. A weight of the particulate material collected was determined from the weights of the filter before and after the collection of the particulate material, and defined as an amount of the particulate material before a plasma treatment.
(4) The plasma generating device PG was operated, and the second and third ports P2 and P3 were put into communication with each other by switching-over of the three-way valve 10. Then, the testing exhaust gas discharged from the plasma generating device PG and flowing through the conduit 5, was diverted into the second branch pipe 9₂ by driving the suction pump 12 at a suction rate of 5.0 L/min, and caused to flow through a new filter 13 over 10 minutes, whereby the particulate material in the testing exhaust gas was collected by the new filter 13. A weight of the particulate material collected was determined from the weights of the filter before and after the collection of the particulate material, and defined as an amount of the particulate material after the plasma treatment.

In the test, an excitation spectrum of the exhaust gas was analyzed as a plasma excited state of the exhaust gas within the plasma generating device PG by an emission spectrometricphotometer (IMUC-7000 made by Otsuka Electronics Co., Ltd.). As a result, the production of a plurality of excited-oxygen atoms by the generation of plasma was observed. Particularly, because an excitation spectrum of 6eV or more was present, the existence of O(¹D) radicals was considered to be present. Thus, it can be said that a plurality of hydroxide excited species and per-hydroxide excited species HOO* were produced.

Table 1 shows plasma generating conditions for Examples 1 to 3.

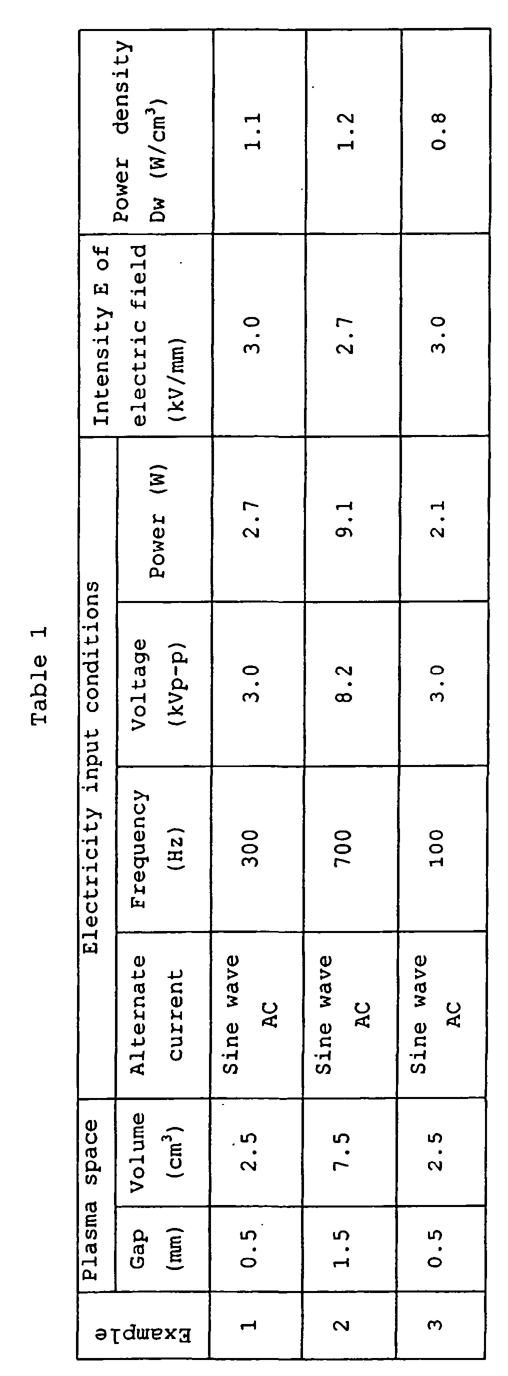

In Table 1, the intensity E of electric field is a value provided by dividing a voltage [(kVₚ₋ₚ)/2] applied between the opposed electrodes such as between the first and second electrodes 14₁ and 14₂ by the gap g (mm), and the power density Dw is a value provided by dividing a power (0.54 W x 5 = 2.7 W) in the plasma space Pp defined by the opposed electrodes by a volume [(2 cm x 5 cm x 0.05 cm) x 5 = 2.5 cm³] of the plasma space Pp.

Table 2 shows amounts of the particulate material before and after the plasma treatment, and decrement amounts and decrement rates of the particulate material decreased by the plasma treatment for Examples 1 to 3.

**Table 2**

| | Particulate material | | | |
|---|---|---|---|---|
| | Amount (mg) before plasma treatment | Amount (mg) after plasma treatment | Decrement amount (mg) | Decrement rate (%) |
| Example 1 | 1.3 | 0.2 | 1.1 | 84.6 |
| Example 2 | 1.2 | 0.7 | 0.5 | 41.7 |
| Example 3 | 1.4 | 0.8 | 0.6 | 42.9 |

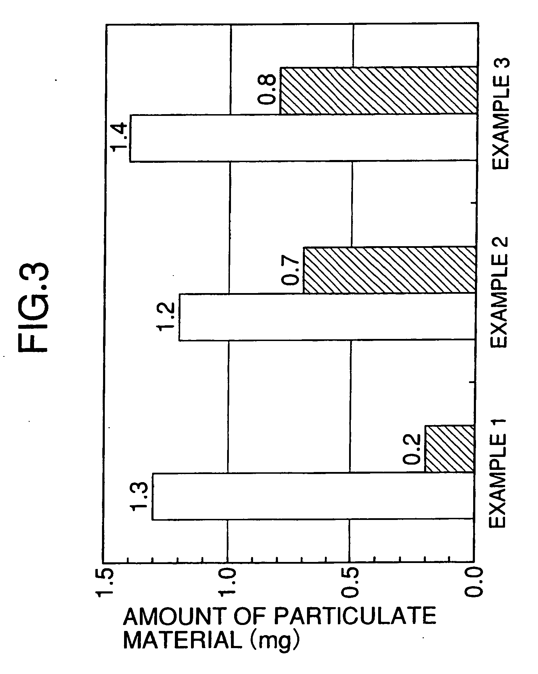

Fig.3 is a graph based on Table 2 and showing amounts of the particulate material before and after the plasma treatment for Examples 1 to 3. As apparent from Tables 1 and 2 and Fig. 3, according to Example 1, per-hydroxide excited species HOO* can be efficiently produced by setting the intensity E of electric field at a value equal to or larger than 3.0 kV/mm and the power density Dw at a value equal to or larger than 1 W/cm³, whereby the decrement rate of the particulate material can be increased to about 84.6 %. The intensity E of electric field is preferably in a range of 3 kV/mm ≤ E ≤ 15 kV/mm, and the power density Dw is preferably in a range of 1 W/cm³ ≤ Dw ≤ 10 W/cm³.

In the cases of Examples 2 and 3, the decrement rate of the particulate material is lower and approximately half of that in Example 1, because one of the intensity E of electric field and the power density Dw dose not satisfies the above-described requirement.

Embodiment I is applicable for decreasing the content of a particulate material contained in an exhaust gas discharged from an automobile, a factory or the like.

According to the above-described process, it is possible to continuously convert the particulate material contained in the exhaust gas from the lean burn engine or the like by the oxidization, to thereby remarkably decrease the content thereof. In addition, this process cannot provide a disadvantage that the exhausting resistance is greatly increased to affect an engine output.

### (Embodiment II)

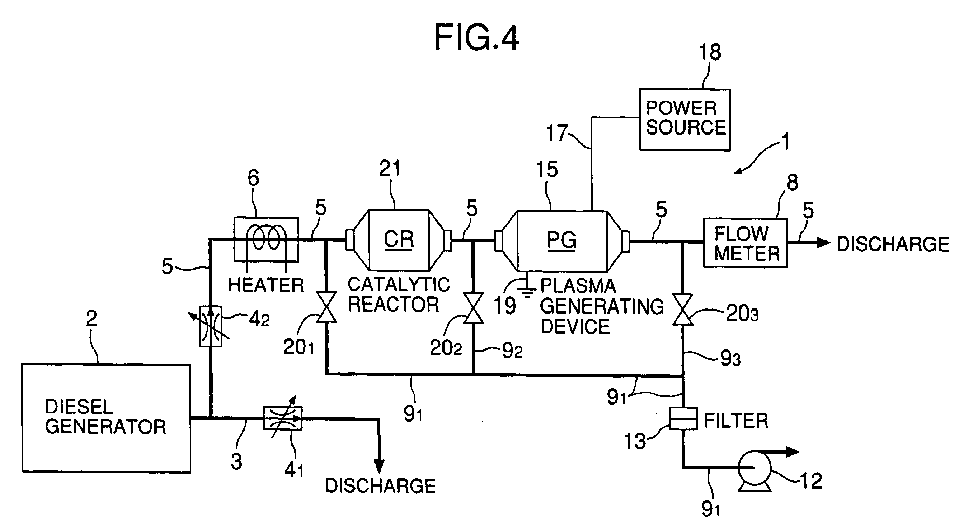

In an equipment 1 for a particulate material content decreasing test shown in Fig. 4, a commercially available diesel generator 2 is selected as a source of generating an exhaust gas containing a particulate material. A first flow rate regulating valve 4₁ is mounted in an exhaust pipe 3 of the diesel generator 2. In the exhaust pipe 3, a conduit 5 is connected at one end between the diesel generator 2 and the first flow rate regulating valve 4₁, and a second flow rate regulating valve 4₂, a heater 6, a catalytic reactor CR, a plasma generating device PG and a flow-meter 8 are mounted on the exhaust pipe 3 sequentially in the named order from the side of the exhaust pipe 3. The other end of the conduit 5 opens to the atmosphere.

In the conduit 5, a first branch pipe 9₁ is connected at one end between the heater 6 and the catalytic reactor CR, and at the other end to a suction port of a suction pump 12. A first on-off valve 20₁ and a filter 13 are mounted in the first branch pipe 9₁ sequentially from the side of the conduit 5. In the conduit 5, a second branch pipe 9₂ is also connected at one end between the catalytic reactor CR and the plasma generating device PG, and at the other end between the first on-off valve 20₁ and the filter 13 in the first branch pipe 9₁. A second on-off valve 20₂ is mounted in the second branch pipe 9₂. Further, in the conduit 5, a third branch pipe 9₃ is connected at one end between the plasma generating device PG and the flow-meter 8, and at the other end between a connection of the second branch pipe 9₂ and the filter 13 in the first branch pipe 9₁. A third on-off valve 20₃ is mounted in the third branch pipe 9₃.

As in Embodiment I, the diesel generator 2 is EXT12D made by Honda Motor Co. Ltd., and the specification thereof is as follows: the type of an engine: a water-cooled 3-cylinder and 4-cycle diesel engine; a total displacement: 1061 cc; a fuel used: diesel light oil; a rated output: 12 kVA. The filter 13 is a Teflon-coated filter made by German Laboratory, and has a mesh size of 0.3 µm mesh.

As shown in Fig.2, the plasma generating device PG has the same structure as that in Embodiment I and includes a plurality of first to sixth electrodes 14₁ to 14₆ made of a metal, each of which is formed into a plate shape in the illustrated embodiment. The first to sixth electrodes 14₁ to 14₆ are mounted in a housing 15 (see Fig.4) so that they are parallel to a direction A of flowing of an exhaust gas, and the adjacent electrodes 14₁ and 14₂; 14₂ and 14₃; 14₃ and 14₄; 14₄ and 14₅; 14₅ and 14₆ are opposed to each other. The surface of the first electrode 14₁ located at one end, which is opposed to the second electrode 14₂, is a non-coated metal surface, but the surface of the second electrode 14₂, which is opposed to the first electrode 14₁, is coated entirely with a dielectric 16. The arrangement relationship between the opposed surfaces of the first and second electrodes 14₁ and 14₂ applies to those between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. The first, third and fifth electrodes 14₁, 14₃ and 14₅ are connected to a power source 18 through lead wires 17, while the second, fourth and sixth electrodes 14₂, 14₄ and 14₆ are earthed through lead wires 19.

If the plasma generating device PG is constructed as described above, the entire surface of each of the dielectrics 16 is uniformly charged upon application of a voltage, and hence the entire space between each of the dielectrics 16 and each of the electrodes 14₁ to 14₆ which is opposed thereto constitutes a plasma space Pp. Namely, the plasma spaces Pp are formed between the first and second electrodes 14₁ and 14₂; between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. That is, each of the plasma spaces Pp is defined by the opposed electrodes.

Each of the first to sixth electrodes 14₁ to 14₆ is formed of a stainless steel (e.g., JIS SUS316), and has a size of 20 mm long, 50 mm wide and 1.0 mm thick, with a transverse side extending along the exhaust gas flowing direction A. Each of the dielectrics 16 comprises an alumina (Al₂O₃) layer having a thickness of 0.5 mm, which is bonded to each of the second to sixth electrodes 14₂ to 14₆ by the mechanical pressing. The adhesion using an adhesive, the flame spraying or the like may be also utilized for such bonding. A gap g in each of the plasma spaces Pp, namely, a distance between each of the adjacent electrodes 14₁ to 14₆ and each of the dielectric 16 is 0.5 mm.

The catalytic reactor CR comprises a honeycomb carrier and platinum (Pt) carried as a catalyst on the honeycomb carrier, and is placed in a housing 21. To carry platinum on the honeycomb carrier, the following process was adopted: (i) 80 grams of a solution of platinum dinitrodiamine nitric acid [Pt(NH₃)₂(NO₂)₂•HNO₃] containing 5 % by weight of platinum, 96 grams of commercially available γ-Al₂O₃, and 1,000 grams of ion-exchange water were mixed together, and at the same time, an excessive amount of water was removed; (ii) a mixture was dried at 200°C for 2 hours; (iii) a powder of Al₂O₃ carrying platinum was produced by calcining the mixture at 600°C for 2 hours; (iv) 90 grams of the powder of Al₂O₃ carrying platinum, 50 grams of an SiO₂ binder (containing 20 % by weight of SiO₂) and 150 grams of ion-exchange water were mixed together; (v) a slurry was prepared by wet-pulverizing the mixture over 12 hours using alumina balls; (vi) a honeycomb carrier carrying a platinum catalyst in an amount of 4g/L at a wash coat amount of 100 g/L was prepared by repeating a process: immersing a honeycomb carrier made of cordierite and having a volume of about 30 L (a diameter of 2.54 and a length of 60 mm) with 400 cells/in² and 6 mils into the slurry; removing an excessive amount of the slurry from the carrier by jet water injection after the removal of the carrier; and drying the carrier at 150°C for 1 hour; (vii) the honeycomb carrier was calcined at 500°C for 2 hours; (viii) the honeycomb carrier carrying the catalyst was placed into the housing 21.

This type of catalytic reactor CR has a structure substantially same as that of a catalytic converter, and hence the exhausting resistance cannot be greatly increased.

A particulate material content-decreasing test was carried out using the above-described equipment by the following procedure:
(1) The diesel generator 2 was operated, and an exhaust gas discharged from the diesel generator 2 was caused to flow through the exhaust gas 3 and the conduit 5.
(2) The flow rate of the testing exhaust gas flowing through the conduit 5, and hence through the catalytic reactor CR and the plasma generating device PG, was regulated to 7.0 L/min by the first and second flow rate regulating valves 4₁ and 4₂, while being measured by the flow-meter 8.
(3) The heater 6 was operated to heat the exhaust gas having a temperature of about 70°C up to 150°C, and the first on-off valve 20₁ was opened, while the second and third on-off valves 20₂ and 20₃ were closed. Then, the testing exhaust gas flowing through the conduit 5 was diverted into the first branch pipe 9₁ by driving the suction pump 12 at a suction rate of 5.0 L/min, and caused to flow through the filter 13 over 20 minutes, whereby a particulate material in the testing exhaust gas was collected by the filter 13. A weight of the particulate material collected was determined from the weights of the filter before and after the collection of the particulate material, and was defined as an amount of the particulate material before a catalytic reaction.
(4) The second on-off valve 20₂ was opened, while the first and third on-off valves 20₁ and 20₃ were closed. Then, the testing exhaust gas flowing through the conduit 5 via the catalytic reactor CR, was diverted into the second branch pipe 9₂ by driving the suction pump 12 at a suction rate of 5.0 L/min, and caused to flow through a new filter 13 over 20 minutes, whereby the particulate material in the testing exhaust gas was collected by the new filter 13. A weight of the particulate material collected was determined from the weights of the filter before and after the collection of the particulate material, and defined as an amount of the particulate material after the catalytic reaction.
(5) The plasma generating device PG was operated, and the third on-off valve 20₃ was opened, while the first and second on-off valves 20₁ and 20₂ were closed. Then, the testing exhaust gas flowing through the conduit 5 via the catalytic reactor CR and the plasma generating device PG, was diverted into the third branch pipe 93 by driving the suction pump 12 at a suction rate of 5.0 L/min, and caused to flow through a new filter 13 over 20 minutes, whereby the particulate material in the testing exhaust gas was collected by the new filter 13. A weight of the particulate material collected was determined from the weights of the filter before and after the collection of the particulate material, and defined as an amount of the particulate material after the plasma treatment.

The process using platinum as the catalyst as described above is defined as Example 4.

A particulate material content-decreasing test was carried out as Example 5 in a similar manner, except that a catalytic reactor CR having silver (Ag) as a catalyst was used, and the temperature of an exhaust gas flowing into the plasma generating device PG was set at 250°C. To carry silver (Ag) on Al₂O₃ in a catalyst-carried honeycomb carrier, this process was the same as Example 3, except that a mixture comprising 4.72 grams of silver nitrate (AgNO₃), 97 grams of commercially available γ-Al₂O₃, and 1,000 grams of ion-exchange water were used as a silver-containing solution, and the amount of silver carried on the honeycomb carrier was set at 3 g/L.

In each of Examples 4 and 5, an excitation spectrum of the exhaust gas was analyzed as a plasma excited state of the exhaust gas within the plasma generating device PG by an emission spectrometricphotometer (IMUC-7000 made by Otsuka Electronics Co., Ltd.). As a result, the production of a plurality of excited-oxygen atoms by the generation of plasma was observed. Particularly, because an excitation spectrum of 6eV or more was present, O(¹D) radicals was considered to be present. Thus, it can be said that if the plasma is generated in the exhaust gas, O(¹D) radicals and ozone excited species are produced by the collision between electrons released from the electrodes and oxygen atoms → hydroxide excited species OH* are produced by the reaction of O(¹D) radicals and ozone excited species with water → per-hydroxide excited species HOO* having a strong oxidizing force are produced by the reaction of the hydroxide excited species OH* with oxygen. Namely, the plasma excited species include O(¹D) radicals, hydroxide excited species OH*, per-hydroxide excited species HOO* and the like.

Table 3 shows plasma generating conditions for Examples 4 and 5.

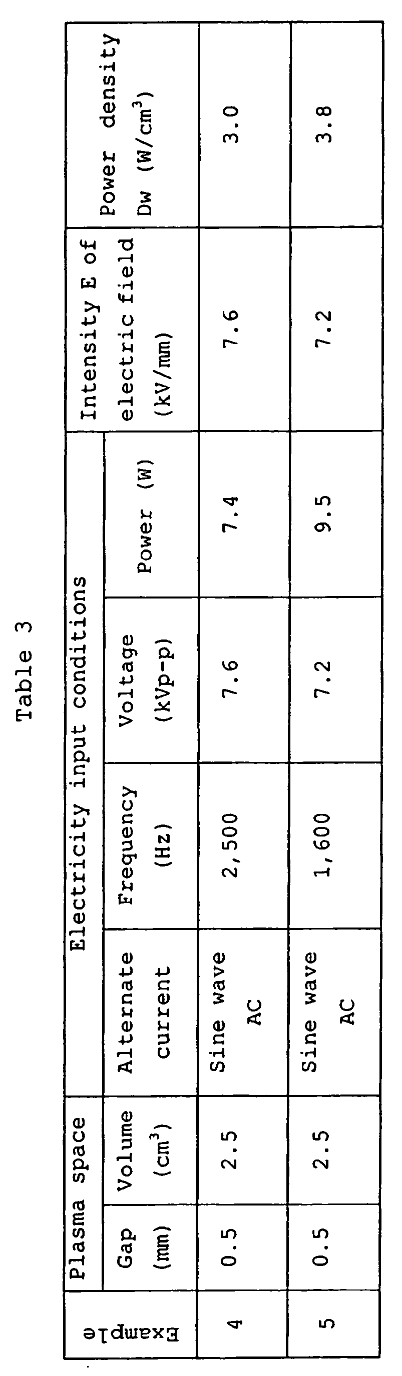

In Table 3, the intensity E of electric field is a value provided by dividing a voltage [(kVₚ₋ₚ)/2] applied between the opposed electrodes such as between the first and second electrodes 14₁ and 14₂ by the gap g (mm), and the power density Dw is a value provided by dividing a power (Example 4: 1.48 W x 5 = 7.4 W; and Example 5: 1.9 W x 5 = 9.5 W) in the plasma space Pp defined by the opposed electrodes by a volume [(2 cm x 5 cm x 0.05 cm) x 5 = 2.5 cm³] of the plasma space Pp.

Table 4 shows amounts of the particulate material before and after the catalytic reaction and after the plasma treatment, and decrement amounts and decrement rates of the particulate material decreased by the catalytic reaction and the plasma treatment for Examples 4 and 5.

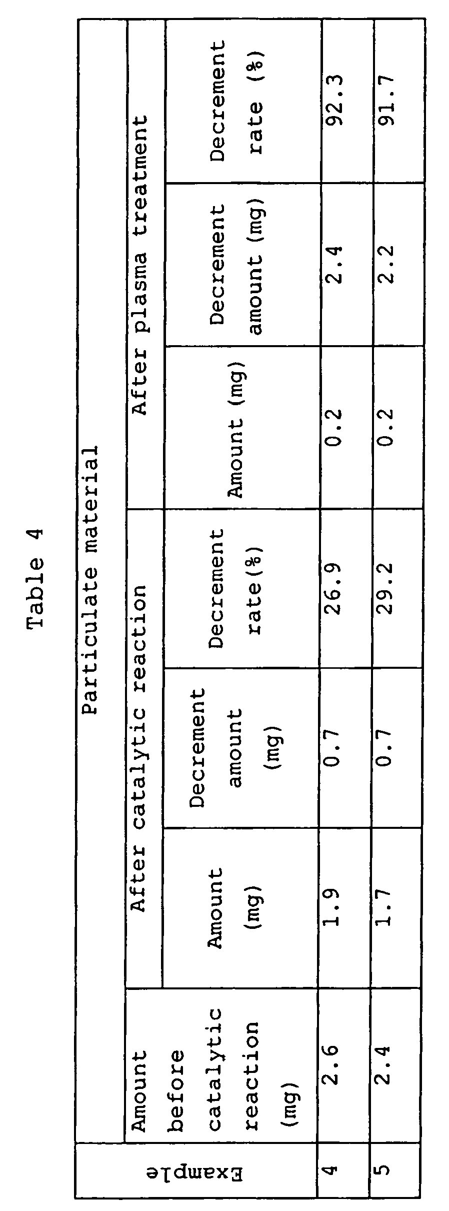

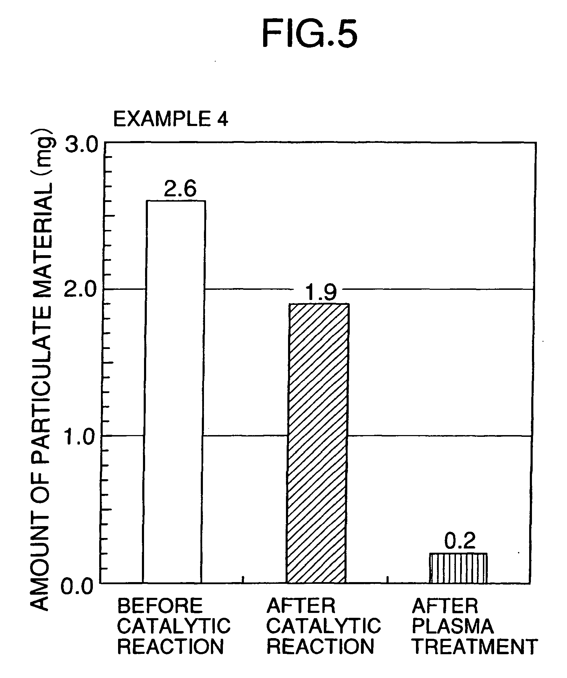

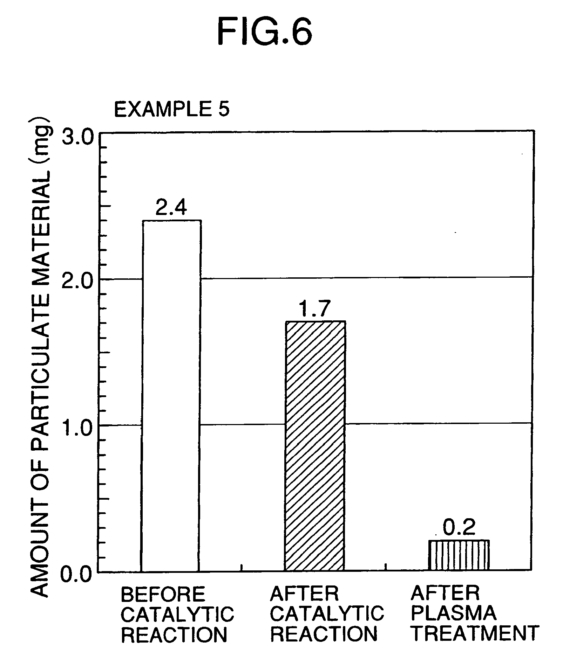

Figs.5 and 6 are graphs based on Table 4 and showing amounts of the particulate material before and after the catalytic reaction and after the plasma treatment for Examples 4 and 5. As apparent from Tables 3 and 4 and Figs.5 and 6, according to Examples 4 and 5, plasma excited species can be efficiently produced by setting the intensity E of electric field at a value equal to or larger than 3.0 kV/mm and setting the power density Dw at a value equal to or larger than 1 W/cm³, whereby the decrement rate of the particulate material can be increased up to about 92 % or more. The intensity E of electric field is preferably in a range of 3 kV/mm ≤ E ≤ 15 kV/mm, and the power density Dw is preferably in a range of 1 W/cm³≤ Dw ≤ 10 W/cm³.

The particulate material before the catalytic reaction was subjected to an extraction using a Soxhlet extractor. As a result, an amount of a fraction soluble in an organic solvent was about 30 % by weight, and an amount of carbon solid fraction was about 70 % by weight. If Table 4 is reviewed with this fact in mind, it can be seen that substantially all the fraction soluble in the organic solvent was converted for purification of the exhaust gas by the catalytic reaction, and the conversion of the carbon solid fraction for purification of the exhaust gas was efficiently carried out by the subsequent plasma treatment.

Embodiment II is applicable for decreasing the content of a particulate material contained in an exhaust gas discharged from an automobile, a factory or the like.

According to the above-described process, it is possible to continuously convert a particulate material contained in an exhaust gas from a lean burn engine or the like by the oxidization, to thereby remarkably decrease the content of the particulate material. In addition, this process cannot provide a disadvantage that the exhausting resistance is greatly increased to affect an engine output.

### Illustrative Examples

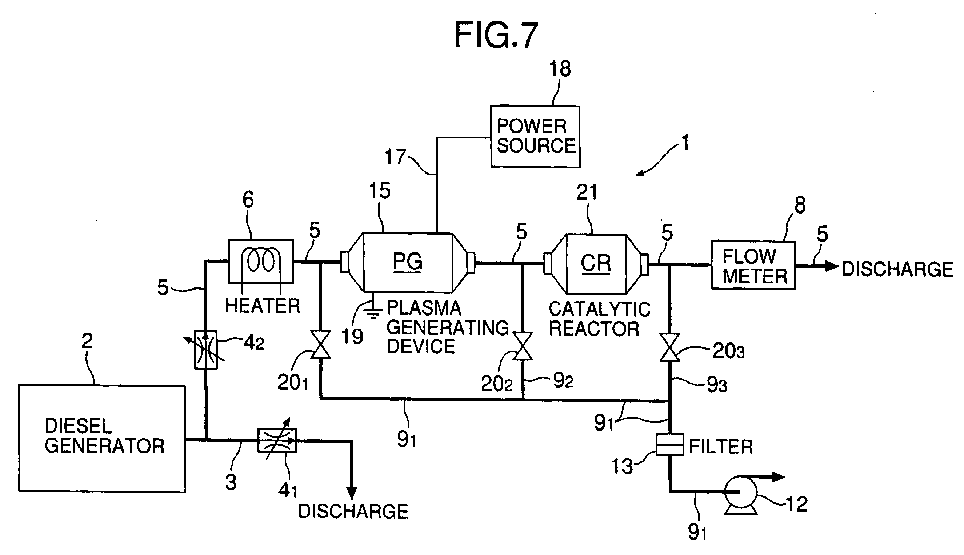

In an equipment 1 for a particulate material content-decreasing test shown in Fig. 7, a commercially available diesel generator 2 is selected as a source of generating an exhaust gas containing a particulate material. A first flow rate regulating valve 4₁ is mounted in an exhaust pipe 3 of the diesel generator 2. In the exhaust pipe 3, a conduit 5 is connected at one end between the diesel generator 2 and the first flow rate regulating valve 4₁, and a second flow rate regulating valve 4₂, a heater 6, a plasma generating device PG, a catalytic reactor CR and a flow-meter 8 are mounted on the exhaust pipe 3 sequentially in the named order from the side of the exhaust pipe 3. The other end of the conduit 5 opens to the atmosphere.

In the conduit 5, a first branch pipe 9₁ is connected at one end between the heater 6 and the plasma generating device PG, and at the other end to a suction port of a suction pump 12. A first on-off valve 20₁ and a filter 13 are mounted in the first branch pipe 9₁ sequentially from the side of the conduit 5. In the conduit 5, a second branch pipe 9₂ is also connected at one end between the plasma generating device PG and the catalytic reactor CR, and at the other end between the first on-off valve 20₁ and the filter 13 in the first branch pipe 9₁. A second on-off valve 20₂ is mounted in the second branch pipe 9₂. Further, in the conduit 5, a third branch pipe 9₃ is connected at one end between the catalytic reactor CR and the flow-meter 8, and at the other end between a connection of the second branch pipe 9₂ and the filter 13 in the first branch pipe 9₁. A third on-off valve 20₃ is mounted in the third branch pipe 9₃.

As in Embodiments I and II, the diesel generator 2 is EXT12D made by Honda Motor Co. Ltd., and the specification thereof is as follows: the type of an engine: a water-cooled 3-cylinder and 4-cycle diesel engine; a total displacement: 1061 cc; a fuel used: diesel light oil; a rated output: 12 kVA. The filter 13 is a Teflon-coated filter made by German Laboratory, and has a mesh size of 0.3 µm mesh.

As shown in Fig.2, the plasma generating device PG has the same structure as that in Embodiments I and II, and includes a plurality of first to sixth electrodes 14₁ to 14₆ made of a metal, each of which is formed into a plate shape in the illustrated embodiment. The first to sixth electrodes 14₁ to 14₆ are mounted in a housing 15 (see Fig.7) so that they are parallel to a direction A of flowing of an exhaust gas, and the adjacent electrodes 14₁ and 14₂; 14₂ and 14₃; 14₃ and 14₄; 14₄ and 14₅; 14₅ and 14₆ are opposed to each other. The surface of the first electrode 14₁ located at one end, which is opposed to the second electrode 14₂, is a non-coated metal surface, but the surface of the second electrode 14₂, which is opposed to the first electrode 14₁, is coated entirely with a dielectric 16. The arrangement relationship between the opposed surfaces of the first and second electrodes 14₁ and 14₂ applies to those between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. The first, third and fifth electrodes 14₁, 14₃ and 14₅ are connected to a power source 18 through lead wires 17, while the second, fourth and sixth electrodes 14₂, 14₄ and 14₆ are earthed through lead wires 19.

If the plasma generating device PG is constructed as described above, the entire surface of each of the dielectrics 16 is uniformly charged upon application of a voltage, and hence the entire space between each of the dielectrics 16 and each of the electrodes 14₁ to 14₆ which is opposed thereto constitutes a plasma space Pp. Namely, the plasma spaces Pp are formed between the first and second electrodes 14₁ and 14₂; between the second and third electrodes 14₂ and 14₃; between the third and fourth electrodes 14₃ and 14₄; between the fourth and fifth electrodes 14₄ and 14₅; and between the fifth and sixth electrodes 14₅ and 14₆. That is, each of the plasma spaces Pp is defined by the opposed electrodes.

Each of the first to sixth electrodes 14₁ to 14₆ is formed of a stainless steel (e.g., JIS SUS316), and has a size of 20 mm long, 50 mm wide and 1.0 mm thick, with a transverse side extending along the exhaust gas flowing direction A. Each of the dielectrics 16 comprises an alumina (Al₂O₃) layer having a thickness of 0.5 mm, which is bonded to each of the second to sixth electrodes 14₂ to 14₆ by the mechanical pressing. The adhesion using an adhesive, the flame spraying or the like may be also utilized for such bonding. A gap g in each of the plasma spaces Pp, namely, a distance between each of the adjacent electrodes 14₁ to 14₆ and each of the dielectric 16 is 0.5 mm.

The catalytic reactor CR comprises a honeycomb carrier and platinum (Pt) carried as a catalyst on the honeycomb carrier, and is placed in a housing 21. To carry platinum on the honeycomb carrier, the following process was adopted: (i) 80 grams of a solution of platinum dinitrodiamine nitric acid [Pt(NH₃)₂(NO₂)₂•HNO₃] containing 5 % by weight of platinum, 96 grams of commercially available γ-Al₂O₃, and 1,000 grams of ion-exchange water were mixed together, and at the same time, an excessive amount of water was removed; (ii) a mixture was dried at 200°C for 2 hours; (iii) a powder of Al₂O₃ carrying platinum was produced by calcining the mixture at 600°C for 2 hours; (iv) 90 grams of the powder of Al₂O₃ having platinum carried thereon, 50 grams of an SiO₂ binder (containing 20 % by weight of SiO₂) and 150 grams of ion-exchange water were mixed together; (v) a slurry was prepared by wet-pulverizing the mixture over 12 hours using alumina balls; (vi) a honeycomb carrier carrying a platinum catalyst in an amount of 4g/L at a wash coat amount of 100 g/L was prepared by repeating a process: immersing a honeycomb carrier made of cordierite and having a volume of about 30 L (a diameter of 2.54 and a length of 60 mm) with 400 cells/in² and 6 mils into the slurry; removing an excessive amount of the slurry from the carrier by jet water injection after the removal of the carrier; and drying the carrier at 150°C for 1 hour; (vii) the honeycomb carrier was calcined at 500°C for 2 hours; (viii) the honeycomb carrier carrying the catalyst was placed into the housing 21.

This type of catalytic reactor CR has a structure substantially same as that of a catalytic converter, and hence the exhausting resistance cannot be greatly increased.

A particulate material content-decreasing test was carried out using the above-described equipment by the following procedure:
(1) The diesel generator 2 was operated, and an exhaust gas discharged from the diesel generator 2 was caused to flow through the exhaust gas 3 and the conduit 5.
(2) The flow rate of the testing exhaust gas flowing through the conduit 5, and hence through the plasma generating device PG and the catalytic reactor CR, was regulated to 7.0 L/min by the first and second flow rate regulating valves 4₁ and 4₂, while being measured by the flow-meter 8.
(3) The heater 6 was operated to heat the exhaust gas having a temperature of about 70°C up to 150°C, and the first on-off valve 20, was opened, while the second and third on-off valves 20₂ and 20₃ were closed. Then, the testing exhaust gas flowing through the conduit 5 was diverted into the first branch pipe 9₁ by driving the suction pump 12 at a suction rate of 5.0 L/min, and caused to flow through the filter 13 over 20 minutes, whereby a particulate material in the testing exhaust gas was collected by the filter 13. A weight of the particulate material collected was determined from the weights of the filter before and after the collection of the particulate material, and was defined as an amount of the particulate material before a catalytic reaction.
(4) The plasma generating device PG was operated, and the second on-off valve 20₂ was opened, while the first and third on-off valves 20₁ and 20₃ were closed. Then, the testing exhaust gas discharged from the plasma generating device PG and flowing through the conduit 5 via the catalytic reactor CR, was diverted into the second branch pipe 9₂ by driving the suction pump 12 at a suction rate of 5.0 L/min, and caused to flow through a new filter 13 over 20 minutes, whereby the particulate material in the testing exhaust gas was collected by the new filter 13. A weight of the particulate material collected was determined from the weights of the filter before and after the collection of the particulate material, and defined as an amount of the particulate material after the plasma treatment.
(5) In a state in which the plasma generating device PG was operated, the third on-off valve 20₃ was opened, while the first and second on-off valves 20₁ and 20₂ were closed. Then, the testing exhaust gas flowing through the conduit 5 via the plasma generating device PG and the catalytic reactor CR, was diverted into the third branch pipe 93 by driving the suction pump 12 at a suction rate of 5.0 L/min, and caused to flow through a new filter 13 over 20 minutes, whereby the particulate material in the testing exhaust gas was collected by the new filter 13. A weight of the particulate material collected was determined from the weights of the filter before and after the collection of the particulate material, and defined as an amount of the particulate material after the catalytic reaction.

The process using platinum as the catalyst as described above is defined as Illustrative Example 1.

A particulate material content-decreasing test was carried out as Illustrative Example 2 in a similar manner, except that a catalytic reactor CR having silver (Ag) as a catalyst was used, and the temperature of an exhaust gas flowing into the plasma generating device PG was set at 250°C. To carry silver (Ag) on Al₂O₃ in a catalyst-carried honeycomb carrier, this process was the same as Illustrative Example 1, except that a mixture comprising 4.72 grams of silver nitrate (AgNO₃), 97 grams of commercially available γ-Al₂O₃, and 1,000 grams of ion-exchange water were used as a silver-containing solution, and the amount of silver carried on the honeycomb carrier was set at 3 g/L.

In each of Illustrative Examples 1 and 2, the exhaust gas upstream and the exhaust gas downstream of the plasma generating device PG was sampled, and the type of the gas was analyzed by FT-IR (a Fourier transform infrared spectroscopic device). As a result, the production of a plurality of nitrogen dioxide molecules and a plurality of ozone molecules by the generation of plasma was observed.

Table 5 shows plasma generating conditions for Illustrative Examples 1 and 2.

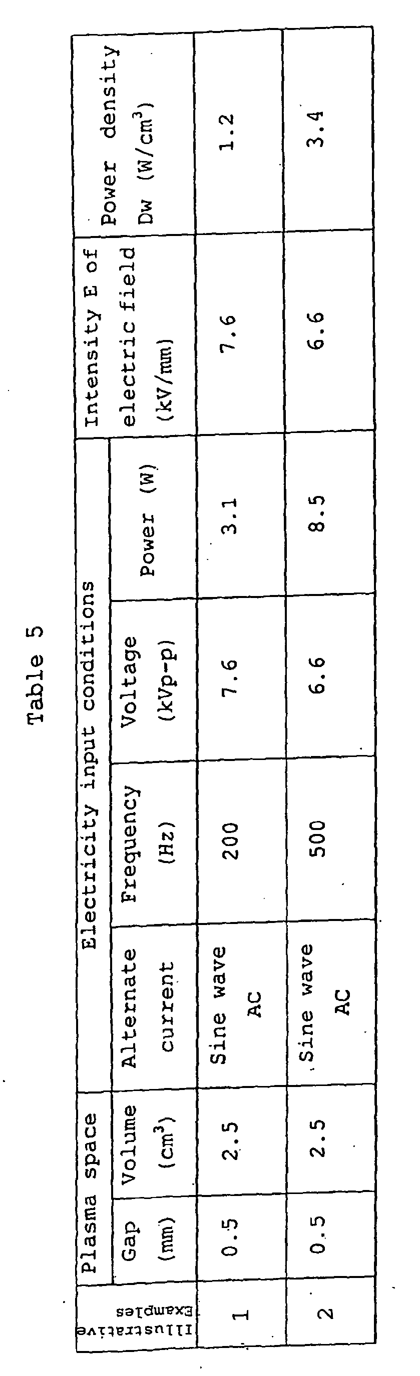

In Table 5, the intensity E of electric field is a value provided by dividing a voltage [(kVₚ₋ₚ)/2] applied between the opposed electrodes such as between the first and second electrodes 14₁ and 14₂ by the gap g (mm), and the power density Dw is a value provided by dividing a power (Illustrative Example 1: 0.62 W x 5 = 3.1 W; and Illustrative Example 2: 1.7 W x 5 = 8.5 W) in the plasma space Pp defined by the opposed electrodes by a volume [(2 cm x 5 cm x 0.05 cm) x 5 = 2.5 cm³] of the plasma space Pp.

Table 6 shows amounts of the particulate material before and after the plasma treatment and after the catalytic reaction, and decrement amounts and decrement rates of the particulate material decreased by the plasma treatment and the catalytic reaction for Illustrative Examples 1 and 2.

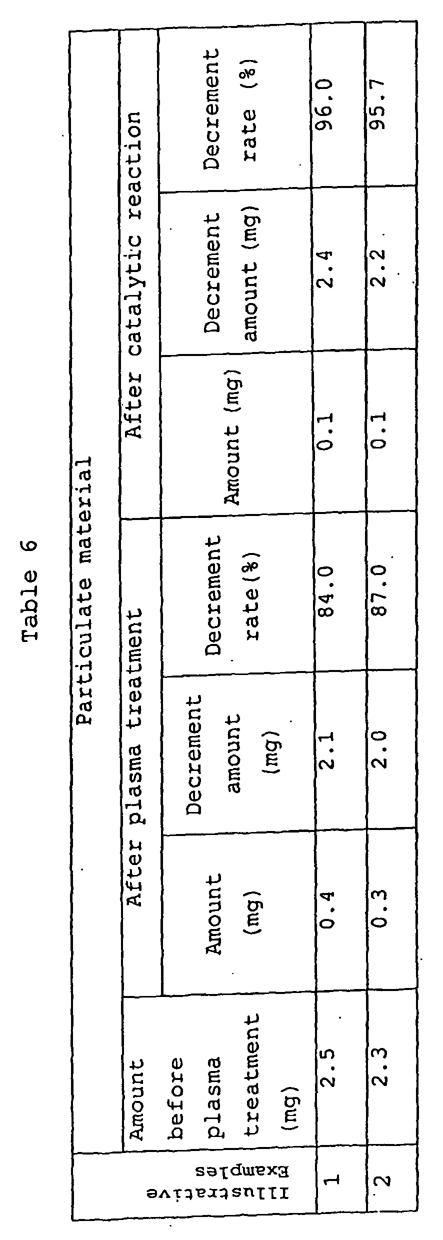

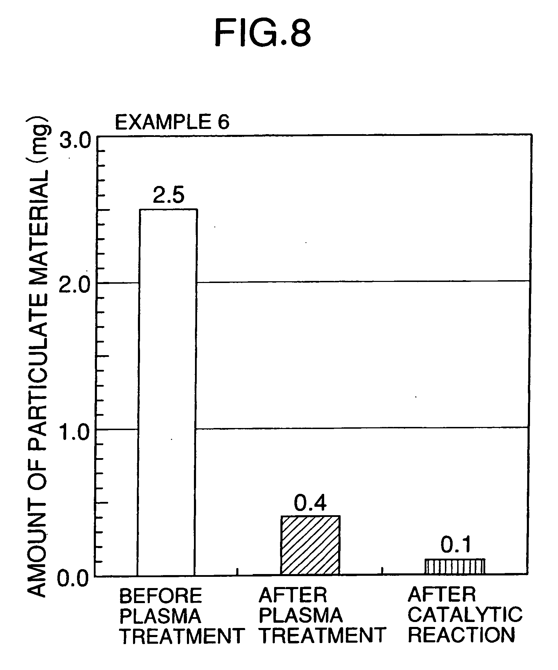

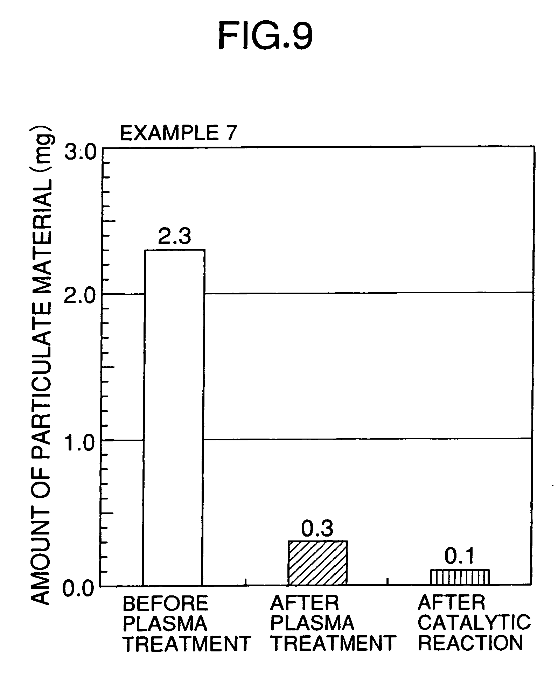

Figs.8 and 9 are graphs based on Table 6 and showing amounts of the particulate material before and after the plasma treatment and after the catalytic reaction for Illustrative Examples 1 and 2. As apparent from Tables 5 and 6 and Figs. 8 and 9, according to Illustrative Examples 1 and 2, nitrogen dioxide and ozone can be efficiently produced by setting the intensity E of electric field at a value equal to or larger than 3.0 kV/mm and setting the power density Dw at a value equal to or larger than 1 W/cm³, whereby the decrement rate of the particulate material can be increased up to about 84 % or more. The intensity E of electric field is preferably in a range of 3 kV/mm ≤ E ≤ 15 kV/mm, and the power density Dw is preferably in a range of 1 W/cm³ ≤ Dw ≤ 10 W/cm³. Further, the decrement rate of the particulate material can be further increased up to approximately 96 % by carrying out the catalytic reaction.

The Illustrative Examples are applicable for decreasing the content of a particulate material contained in an exhaust gas discharged from an automobile, a factory or the like.

According to the above-described process, it is possible to continuously convert a particulate material contained in an exhaust gas from a lean burn engine or the like by the oxidization, to thereby remarkably decrease the content of the particulate material. In addition, this process cannot provide a disadvantage that the exhausting resistance is greatly increased to affect an engine output.

## Claims

1. A process for decreasing the content of a particulate material contained in an exhaust gas from a lean burn engine, comprising the steps of: generating plasma in the exhaust gas discharged from the lean burn engine and containing the particulate material, to thereby produce a plurality of O(¹D) radicals and subsequently produce a plurality of per-hydroxide excited species; and oxidizing the particulate material by the per-hydroxide excited species, wherein in plasma generating conditions, an intensity E of an electric field is set at a value equal to or larger than 3.0 kV/mm, and a power density Dw is set at a value equal to or larger than 1 W/cm³.

2. A process for decreasing the content of a particulate material contained in an exhaust gas from a lean burn engine or the like according to claim 1, wherein the surface of at least one of the opposed electrodes which is opposed to the other electrode is covered with a dielectric.

3. A process for decreasing the content of a particulate material contained in an exhaust gas from a lean burn engine according to claim 1 or 2 comprising a carbon solid fraction and a soluble organic fraction covering the carbon solid fraction, the process comprising the steps of: subjecting the soluble organic fraction to the reaction with oxygen under the presence of a catalyst to oxidize the soluble organic fraction; generating plasma in the exhaust gas to produce plasma excited species; and oxidizing the carbon solid fraction by the plasma excited species.

4. A process for decreasing the content of a particulate material contained in an exhaust gas from a lean burn engine or the like according to claim 3, wherein the catalyst is at least one selected from the group consisting of Pt, Pd, Rh, Cu Ag and Au.

5. A process for decreasing the content of a particulate material contained in an exhaust gas from a lean burn engine or the like according to claim 3 or 4, wherein the surface of at least one of the opposed electrodes which is opposed to the other electrode is covered with a dielectric.

6. A process for decreasing the content of a particulate material contained in an exhaust gas from a lean burn engine or the like according to claim 1-5, wherein the lean burn engine is a diesel engine.

## Patentansprüche

1. Verfahren zur Verringerung des Gehalts an teilchenförmigem Material, welches in einem Abgas aus einem Magergemischmotor enthalten ist, umfassend die Schritte: Erzeugen von Plasma im Abgas, welches vom Magergemischmotor abgegeben wird und welches teilchenförmiges Material enthält, um **dadurch** mehrere O(¹D) Radikale zu erzeugen, und um anschließend mehrere Perhydroxid-angeregte Spezies zu erzeugen; und Oxidieren des teilchenförmigen Materials durch die Perhydroxid-angeregten Spezies, wobei unter den plasmaerzeugenden Bedingungen eine Intensität E eines elektrischen Felds bei einem Wert gleich oder größer als 3,0 kV/mm festgelegt wird und eine Energiedichte Dw bei einem Wert gleich oder größer als 1 W/cm³ festgelegt wird.

2. Verfahren zur Verringerung des Gehalts an teilchenförmigem Material, welches in einem Abgas aus einem Magergemischmotor oder dergleichen enthalten ist, gemäß Anspruch 1, wobei die Oberfläche von wenigstens einer der einander gegenüber liegenden Elektroden, welche der anderen Elektrode gegenüber liegt, mit einem Dielektrikum bedeckt ist.

3. Verfahren zur Verringerung des Gehalts an teilchenförmigem Material, welches in einem Abgas aus einem Magergemischmotor enthalten ist, gemäß Anspruch 1 oder 2, umfassend eine Kohlenstoff-Feststoff-Fraktion und eine lösliche organische Fraktion, welche die Kohlenstoff-Feststoff-Fraktion bedeckt, wobei das Verfahren die Schritte umfasst: Unterziehen der löslichen organischen Fraktion der Reaktion mit Sauerstoff in Gegenwart eines Katalysators zur Oxidierung der löslichen organischen Fraktion; Erzeugen von Plasma im Abgas zur Erzeugung von Plasma-angeregten Spezies; und Oxidieren der Kohlenstoff-Feststoff-Fraktion durch die Plasma-angeregten Spezies.

4. Verfahren zur Verringerung des Gehalts an teilchenförmigem Material, welches in einem Abgas aus einem Magergemischmotor enthalten ist, gemäß Anspruch 3, wobei der Katalysator wenigstens ein Katalysator ist, der aus der Gruppe bestehend aus Pt, Pd, Rh, Cu, Ag und Au ausgewählt ist.

5. Verfahren zur Verringerung des Gehalts an teilchenförmigem Material, welches in einem Abgas aus einem Magergemischmotor oder dergleichen enthalten ist, gemäß Anspruch 3 oder 4, wobei die Oberfläche von wenigstens einer der einander gegenüber liegenden Elektroden, welche der anderen Elektrode gegenüber liegt, mit einem Dielektrikum bedeckt ist.

6. Verfahren zur Verringerung des Gehalts an teilchenförmigem Material, welches in einem Abgas aus einem Magergemischmotor oder dergleichen enthalten ist, gemäß Anspruch 1 bis 5 wobei der Magergemischmotor ein Dieselmotor ist.

## Revendications

1. Procédé de réduction de la teneur en matière particulaire contenue dans un gaz d'échappement provenant d'un moteur à charge stratifiée, comprenant les étapes de : génération de plasma dans le gaz d'échappement évacué du moteur à charge stratifiée et contenant la matière particulaire, pour ainsi produire une pluralité de radicaux O(¹D) puis produire une pluralité d'espèces excitées de perhydroxyde ; et oxydation de la matière particulaire par les espèces excitées de perhydroxyde, dans lequel, dans des conditions de génération de plasma, une intensité E d'un champ électrique est définie à une valeur égale ou supérieure à 3,0 kV/mm, et une densité de puissance Dw est définie à une valeur égale ou supérieure à 1 W/cm³.

2. Procédé de réduction de la teneur en matière particulaire contenue dans un gaz d'échappement provenant d'un moteur à charge stratifiée ou similaires selon la revendication 1, dans lequel la surface d'au moins l'une des électrodes opposées qui est opposée à l'autre électrode est recouverte d'un diélectrique.

3. Procédé de réduction de la teneur en matière particulaire contenue dans un gaz d'échappement provenant d'un moteur à charge stratifiée selon la revendication 1 ou 2, comprenant une fraction solide de carbone et une fraction organique soluble recouvrant la fraction solide de carbone, le procédé comprenant les étapes de : soumission de la fraction organique soluble à la réaction avec l'oxygène en présence d'un catalyseur pour oxyder la fraction organique soluble ; génération de plasma dans le gaz d'échappement pour produire des espèces excitées de plasma ; et oxydation de la fraction solide de carbone par les espèces excitées de plasma.

4. Procédé de réduction de la teneur en matière particulaire contenue dans un gaz d'échappement provenant d'un moteur à charge stratifiée ou similaires selon la revendication 3, dans lequel le catalyseur est au moins un sélectionné dans le groupe constitué par Pt, Pd, Rh, Cu, Ag et Au.

5. Procédé de réduction de la teneur en matière particulaire contenue dans un gaz d'échappement provenant d'un moteur à charge stratifiée ou similaires selon la revendication 3 ou 4, dans lequel la surface d'au moins l'une des électrodes opposées qui est opposée à l'autre électrode est recouverte d'un diélectrique.

6. Procédé de réduction de la teneur en matière particulaire contenue dans un gaz d'échappement provenant d'un moteur à charge stratifiée ou similaires selon la revendication 1 à 5, dans lequel le moteur à charge stratifiée est un moteur diesel.
